# FASCICULE DE BREVET EUROPEEN

(11) **EP 2 355 477 B1**
(45) Date de publication et mention de la délivrance du brevet: **16.01.2013**
(21) Numéro de dépôt: 11152498.9
(22) Date de dépôt: 28.01.2011
(51) Int. Cl.: H04M 3/51, H04M 3/533

(54) **Procédés pour accéder directement au répondeur vocal d'un destinataire et pour déposer un message vocal sur un répondeur**
Verfahren zum direkten Zugriff auf das Voicemail eines angerufenen Teilnehmers und zum Hinterlassen einer Sprachnachricht auf einen Anrufbeantworter
Method for directly accessing a called party's voicemail and delivering a speech message on an answering machine

(30) Priorité: 28.01.2010 FR 1050589
(43) Date de publication de la demande: 10.08.2011
(73) Titulaire: Neocom Multimedia, 13003 Marseille (FR)
(72) Inventeur: Derderian, Didier, 83330 Le Castellet (FR); François, Thierry, 75015 Paris (FR); Raimondeau, Stéphane, 85170 Le Poiré sur Vie (FR)
(74) Mandataire: Remy, Vincent Noel Paul

(56) Documents cités:
- EP-A1- 1 924 065
- US-B1- 6 233 319

## Description

Il existe de nombreuses circonstances dans lesquelles le fait d'atteindre directement le répondeur d'un destinataire serait utile. C'est le cas notamment pour délivrer des messages publicitaires ou, plus couramment, pour donner une information à un destinataire dont on sait qu'il n'est pas disponible pour décrocher son téléphone.

Chez certains opérateurs téléphoniques, une solution existe déjà qui consiste à accéder aux serveurs informatiques hébergeant les boites vocales de réception des abonnés pour y ajouter des messages vocaux dans un but d'information ou de publicité. Il s'agit alors d'utiliser des moyens informatiques pour accéder directement à l'espace de stockage des messages vocaux des abonnés. Cette solution ne peut pas fonctionner sans adaptation pour n'importe quel opérateur téléphonique.

D'autres solutions sont décrites dans les documents EP1 924 065 et US 6 233 319.

La présente invention vise à proposer une solution multiopérateurs qui est indépendante de l'architecture matérielle et logicielle d'un opérateur téléphonique et peut donc fonctionner à destination de n'importe quel abonné, dès lors que ce dernier utilise une ligne téléphonique configurée pour renvoyer vers un répondeur vocal les appels téléphoniques reçus lorsque la ligne est occupée.

La présente invention a pour objet un procédé pour accéder directement au répondeur vocal d'une ligne téléphonique configurée pour renvoyer vers le répondeur vocal les appels téléphoniques reçus lorsque la ligne est occupée, ce procédé étant **caractérisé en ce qu**'il consiste à exécuter les étapes suivantes :
- on déclenche un premier groupe d'appels à destination de la ligne,
- on attend un premier délai prédéterminé, suffisamment long pour avoir placé la ligne à l'état occupé,
- on déclenche un nouvel appel à destination de la ligne,
- on stoppe les appels du premier groupe au bout d'un second délai prédéterminé, plus long que le premier délai mais suffisamment court pour ne pas avoir fait sonner le téléphone de la ligne cible.

Grâce à ce procédé, on peut atteindre directement le répondeur d'un destinataire sans faire sonner son téléphone, donc sans le déranger.

Une fois le répondeur déclenché, il suffit d'écouter le message d'accueil du répondeur et de déposer le message vocal souhaité.

Dans l'hypothèse où l'accès direct au répondeur vocal d'un destinataire serait utilisé pour déposer automatiquement un message pré-enregistré, l'invention propose également un procédé qui permet d'attendre la fin d'un message vocal d'accueil avant d'émettre un message vocal.

L'invention a ainsi également pour objet un procédé pour déposer automatiquement un message vocal pré-enregistré sur un répondeur vocal d'une ligne configurée pour renvoyer vers le répondeur vocal les appels téléphoniques reçus lorsque la ligne est occupée. Ce procédé se caractérise par le fait que l'on exécute d'abord le procédé pour accéder directement au répondeur vocal, puis, sur le nouvel appel, on exécute les étapes suivantes pour émettre automatiquement un message vocal pré-enregistré à la fin du message d'accueil du répondeur vocal,
- on écoute la ligne,
- on attend un silence d'au moins une durée prédéterminée avant de passer à l'étape suivante,
- on émet le message vocal pré-enregistré sur la ligne,
- pendant l'émission du message, on continue d'écouter la ligne,
- si le silence est interrompu sur la ligne, on revient à la première étape d'écoute de la ligne,
puis on stoppe le nouvel appel.

On peut ainsi déposer un message vocal pré-enregistré sur un répondeur d'un destinataire sans faire sonner le téléphone de ce destinataire.

Les étapes permettant d'émettre automatiquement le message vocal pré-enregistré à la fin du message d'accueil du répondeur vocal permettent de détecter automatiquement la fin d'un message d'accueil et de commencer au bon moment l'émission d'un message vocal prédéterminé sur le répondeur d'un destinataire.

L'invention trouve une application particulièrement avantageuse dans le cas où l'on dépose des messages pré-enregistrés sur les répondeurs d'un nombre important de destinataires, par exemple dans un but publicitaire.

Dans ce cas, l'invention permet de réaliser de manière vocale l'équivalent d'un mailing adressé sous forme écrite à des destinataires enregistrés dans une base de données.

On comprend que l'invention fonctionne quel que soit l'opérateur téléphonique auprès duquel sont abonnés les destinataires du mailing.

Pour mettre en oeuvre l'invention, on peut utiliser des lignes téléphoniques analogiques ou numériques, unitaires ou groupées.

En variante, on dépose automatiquement un message vocal pré-enregistré sur un répondeur vocal d'une ligne configurée pour renvoyer vers le répondeur vocal les appels téléphoniques reçus lorsque la ligne est occupée en exécutant d'abord un procédé pour accéder directement au répondeur vocal conforme à l'invention, puis, sur le nouvel appel, en déposant le message vocal pré-enregistré selon un procédé pour émettre automatiquement le message vocal pré-enregistré autre que celui décrit ci-dessus.

La mise en oeuvre du procédé peut être réalisée par un logiciel serveur vocal permettant d'automatiser, par programmation informatique, les différentes étapes des procédés. A cet effet, on peut utiliser, par exemple, le logiciel open source Asterisk.

D'un point de vue matériel, le logiciel serveur vocal peut être exécuté sur un serveur informatique contenant une ou plusieurs cartes vocales. A cet effet, des cartes de la marque Digium peuvent être utilisées pour transformer les signaux téléphoniques en informations compréhensibles par le logiciel serveur vocal.

L'invention a également pour objet un programme d'ordinateur pour la mise en oeuvre du procédé décrit ci-dessus d'accès direct au répondeur vocal d'une ligne configurée pour renvoyer vers le répondeur vocal les appels téléphoniques reçus lorsque la ligne est occupée, **caractérisé en ce qu**'il comprend des instructions pour:
- déclencher un premier groupe d'appels à destination de la ligne,
- attendre un premier délai prédéterminé, suffisamment long pour avoir placé la ligne à l'état occupé,
- déclencher un nouvel appel à destination de la ligne,
- stopper les appels du premier groupe au bout d'un second délai prédéterminé, plus long que le premier délai mais suffisamment court pour ne pas avoir fait sonner le téléphone de la ligne.

L'invention a également pour objet un programme d'ordinateur pour la mise en oeuvre du procédé décrit ci-dessus de dépôt automatique d'un message vocal pré-enregistré sur un répondeur vocal d'une ligne configurée pour renvoyer vers le répondeur vocal les appels téléphoniques reçus lorsque la ligne est occupée, **caractérisé en ce qu**'il comporte des instructions pour :
- déclencher un premier groupe d'appels à destination de la ligne cible,
- attendre un premier délai prédéterminé, suffisamment long pour avoir placé la ligne à l'état occupé,
- déclencher un nouvel appel à destination de la ligne,
- stopper les appels du premier groupe au bout d'un second délai prédéterminé, plus long que le premier délai mais suffisamment court pour ne pas avoir fait sonner le téléphone de la ligne,
- écouter la ligne,
- attendre un silence d'au moins une durée prédéterminée avant de passer à l'étape suivante,
- émettre le message vocal pré-enregistré sur la ligne,
- pendant l'émission du message, continuer d'écouter la ligne,
- si le silence est interrompu sur la ligne, revenir à l'étape d'écoute de la ligne.

L'invention porte également sur les serveurs informatiques hébergeant les programmes décrits ci-dessus.

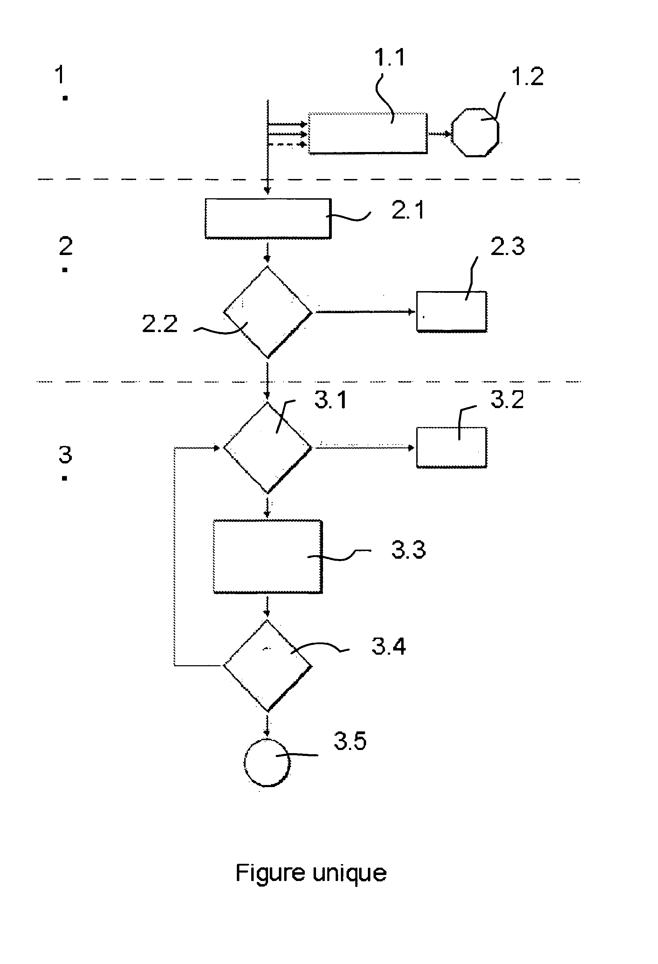

Afin de mieux faire comprendre l'invention, on va en décrire maintenant un exemple de réalisation, en référence au dessin annexé qui comporte une figure unique contenant un organigramme des étapes élémentaires exécutées par le logiciel serveur vocal vis à vis d'une ligne désignée « ligne cible ».

L'exécution du procédé de dépôt automatique d'un message vocal pré-enregistré sur le répondeur d'un destinataire se décompose en trois phases, à savoir une phase 1 d'accès à la ligne cible, une phase 2 d'accès au répondeur vocal et une phase 3 d'émission automatique d'un message sur le répondeur.

Lors de la phase 1 d'accès à la ligne cible, on déclenche (étape1.1) un premier groupe d'appels téléphoniques à destination de la ligne cible. Ces premiers appels peuvent être désignés « appels bloqueurs ». Chacun de ces appels bloqueurs est d'une durée prédéterminée qui est suffisamment courte pour ne pas faire sonner le téléphone raccordé à la ligne cible mais suffisamment longue pour que cette ligne soit placée, du fait des appels entrants simultanés, à l'état occupé.

Suivant le type d'abonnement et l'opérateur concerné, un appel bloqueur peut suffire mais plusieurs peuvent être nécessaires. Par exemple, si la ligne est capable de recevoir deux appels simultanés, au moins deux appels simultanés seront indispensables pour bloquer la ligne. En outre, les inventeurs ont remarqué que le fait d'émettre un nombre d'appels bloqueurs strictement supérieur au nombre d'appels entrants autorisés sur la ligne cible améliore statistiquement l'efficacité du procédé.

Avant de stopper les appels bloqueurs (étape 1.2), c'est-à-dire pendant le délai prédéterminé défini précédemment, on entre dans la phase 2 en déclenchant un nouvel appel (étape 2.1) à destination de la ligne cible. Ce nouvel appel arrivant sur une ligne occupée, il est renvoyé sur le répondeur vocal de la ligne cible, lequel commence à émettre un message d'accueil (étape 2.2).

En cas d'échec d'accès au répondeur (étape 2.3), le processus s'arrête et l'appel pourra être renouvelé ultérieurement (par un processus de relance non décrit). En cas de succès, on passe à la phase 3 d'émission automatique d'un message sur le répondeur. Cette phase commence par une première étape 3.1 d'écoute de la ligne téléphonique et l'attente d'un silence d'au moins une durée prédéterminée (par exemple 3 secondes). Tant qu'un silence de cette durée n'a pas été écouté sur la ligne, on ne passe pas à l'étape suivante. En cas d'attente trop longue, par exemple après une attente de 2 minutes, le procédé est interrompu (étape 3.2) et l'appel vers la même ligne cible devra être renouvelé ultérieurement.

En cas d'apparition d'un silence d'au moins la durée précédemment indiquée, on déclenche la lecture du message pré-enregistré (étape 3.3), ce qui permet d'émettre ce message vocal sur la ligne. Pendant l'émission du message vocal, on continue d'écouter la ligne cible (étape 3.4). Si le répondeur est effectivement passé en phase d'enregistrement du fait que le message d'accueil a été intégralement délivré, la ligne reste silencieuse et le message vocal émis sur la ligne est enregistré sur le répondeur. En revanche, si le silence sur la ligne téléphonique s'interrompt, cela signifie que le silence précédemment détecté ne marquait pas la fin du message vocal et on revient à l'étape 3.1 d'écoute de la ligne téléphonique et d'attente d'un silence suffisamment long.

Ce n'est que lorsqu'un nouveau silence est à nouveau détecté que le message vocal pré-enregistré est à nouveau délivré pour être enregistré sur le répondeur, selon le même déroulement que précédemment.

Une fois émise l'intégralité du message vocal pré-enregistré, on suppose que ce message a été convenablement enregistré sur le répondeur de la ligne cible et le procédé s'arrête (étape 3.5).

On voit que le procédé décrit ci-dessus ne dépend pas de l'architecture logicielle ou matérielle de l'opérateur auprès duquel le destinataire de la ligne est abonné.

Le procédé décrit ci-dessus peut bien entendu être mis en oeuvre pour accéder directement au répondeur d'un destinataire et déposer sur ce répondeur un message dicté oralement par un utilisateur.

Dans ce cas, seules les phases 1 et 2 d'accès à la ligne cible et d'accès au répondeur sont mises en oeuvre.

Il est bien entendu que le mode de réalisation qui vient d'être décrit ne présente aucun caractère limitatif et qu'il pourra recevoir toute modification désirable sans sortir pour cela du cadre défini par les revendications annexées.

En particulier, l'invention s'applique aussi bien à des lignes de téléphonie fixe qu'à des lignes de téléphonie mobile.

En outre, on pourra prévoir d'exploiter un procédé pour émettre automatiquement un message vocal pré-enregistré à la fin d'un message d'accueil d'un répondeur vocal, consistant à exécuter les étapes suivantes:
- on écoute la ligne,
- on attend un silence d'au moins une durée prédéterminée avant de passer à l'étape suivante,
- on émet le message vocal pré-enregistré sur la ligne,
- pendant l'émission du message, on continue d'écouter la ligne,
- si le silence est interrompu sur la ligne, on revient à la première étape d'écoute de la ligne,
indépendamment du procédé pour accéder directement au répondeur vocal d'une ligne téléphonique configurée pour renvoyer vers le répondeur vocal les appels téléphoniques reçus lorsque la ligne est occupée, consistant à exécuter les étapes suivantes :
- on déclenche un premier groupe d'appels à destination de la ligne,
- on attend un premier délai prédéterminé, suffisamment long pour avoir placé la ligne à l'état occupé,
- on déclenche un nouvel appel à destination de la ligne,
- on stoppe les appels du premier groupe au bout d'un second délai prédéterminé, plus long que le premier délai mais suffisamment court pour ne pas avoir fait sonner le téléphone de la ligne cible.

De façon analogue, on pourra prévoir d'exploiter un programme d'ordinateur pour la mise en oeuvre du procédé décrit ci-dessus d'émission automatique d'un message vocal pré-enregistré à la fin d'un message d'accueil d'un répondeur vocal, comprenant des instructions pour:
- écouter la ligne,
- attendre un silence d'au moins une durée prédéterminée avant de passer à l'étape suivante,
- émettre le message vocal pré-enregistré sur la ligne,
- pendant l'émission du message, continuer d'écouter la ligne,
- si le silence est interrompu sur la ligne, revenir à la première étape d'écoute de la ligne,
indépendamment du programme d'ordinateur pour la mise en oeuvre du procédé décrit ci-dessus d'accès direct au répondeur vocal d'une ligne configurée pour renvoyer vers le répondeur vocal les appels téléphoniques reçus lorsque la ligne est occupée, comprenant des instructions pour :
- déclencher un premier groupe d'appels à destination de la ligne,
- attendre un premier délai prédéterminé, suffisamment long pour avoir placé la ligne à l'état occupé,
- déclencher un nouvel appel à destination de la ligne,
- stopper les appels du premier groupe au bout d'un second délai prédéterminé, plus long que le premier délai mais suffisamment court pour ne pas avoir fait sonner le téléphone de la ligne.

## Revendications

1. Procédé pour accéder directement au répondeur vocal d'une ligne téléphonique configurée pour renvoyer vers le répondeur vocal les appels téléphoniques reçus lorsque la ligne est occupée, **caractérisé en ce qu'**il consiste à exécuter les étapes suivantes :
- on déclenche un premier groupe d'appels à destination de la ligne cible (1.1),
- on attend un premier délai prédéterminé, suffisamment long pour avoir placé la ligne à l'état occuper (2.1),
- on déclenche un nouvel appel à destination de la ligne,
- on stoppe les appels du premier groupe au bout d'un second délai prédéterminé, plus long que le premier délai mais suffisamment court pour ne pas avoir fait sonner le téléphone de la ligne (1.2),

2. Procédé pour déposer automatiquement un message vocal pré-enregistré sur un répondeur vocal d'une ligne configurée pour renvoyer vers le répondeur vocal les appels téléphoniques reçus lorsque la ligne est occupée, dans lequel on exécute d'abord le procédé selon la revendication 1 pour accéder directement au répondeur vocal, puis, sur le nouvel appel, on exécute les étapes suivantes pour émettre automatiquement un message vocal pré-enregistré à la fin du message d'accueil du répondeur vocal:
- on écoute la ligne (3.1),
- on attend un silence d'au moins une durée prédéterminée avant de passer à l'étape suivante,
- on émet le message vocal pré-enregistré sur la ligne (3.3),
- pendant l'émission du message, on continue d'écouter la ligne (3.4),
- si le silence est interrompu sur la ligne, on revient à la première étape d'écoute de la ligne (3.1),
- puis on stoppe le nouvel appel.

3. Programme d'ordinateur pour la mise en oeuvre du procédé selon la revendication 1 d'accès direct au répondeur vocal d'une ligne téléphonique configurée pour renvoyer vers le répondeur vocal les appels téléphoniques reçus lorsque la ligne est occupée, **caractérisé en ce qu'**il comprend des instructions pour :
- déclencher un premier groupe d'appels à destination de la ligne cible (1.1),
- attendre un premier délai prédéterminé, suffisamment long pour avoir placé la ligne à l'état occupée (1.2),
- déclencher un nouvel appel à destination de la ligne,
- stopper les appels du premier groupe au bout d'un second délai prédéterminé, plus long que le premier délai mais suffisamment court pour ne pas avoir fait sonner le téléphone de la ligne (2.1),

4. Programme d'ordinateur pour la mise en oeuvre du procédé selon la revendication 2 de dépôt automatique d'un message vocal pré-enregistré sur un répondeur vocal d'un ligne configurée pour renvoyer vers le répondeur vocal les appels téléphoniques reçus lorsque la ligne est occupée, comportant des instructions pour :
- déclencher un premier groupe d'appels à destination de la ligne cible (1.1),
- attendre un premier délai prédéterminé, suffisamment long pour avoir placé la ligne à l'état occupé (2.1),
- déclencher un nouvel appel à destination de la ligne,
- stopper les appels du premier groupe au bout d'un second délai prédéterminé, plus long que le premier délai mais suffisamment court pour ne pas avoir fait sonner le téléphone de la ligne (1.2),
- écouter la ligne (3.1),
- attendre un silence d'au moins une durée prédéterminée avant de passer à l'étape suivante,
- émettre le message vocal pré-enregistré sur la ligne (3.3)
- pendant l'émission du message, continuer d'écouter la ligne (3.4),
- si le silence est interrompu sur la ligne, revenir à l'étape d'écoute de la ligne (3.1).

5. Serveur informatique hébergeant un programme d'ordinateur selon la revendication 3 ou 4.

## Claims

1. A method of directly accessing the voice mailbox of a telephone line that is configured, while the line is busy, to redirect incoming telephone calls to its voice mailbox, the method being **characterized in that** it consists in executing the following steps:
· triggering a first group of calls to the target line (1.1);
· waiting for a first predetermined duration that is long enough to have placed the line in the busy state;
· triggering a new call to the line (2.1); and
· stopping the calls of the first group at the end of a second predetermined duration that is longer than the first duration, but short enough to avoid causing the telephone of the line to ring (1.2).

2. A method of automatically placing a pre-recorded voice message in a voice mailbox of a line that is configured, while the line is busy, to redirect incoming telephone calls to its voice mailbox, wherein the method according to claim 1 is executed initially in order to access the voice mailbox directly, and then on the new call, the following steps are executed to send a pre-recorded voice message automatically at the end of the greeting message of the voice mailbox:
· listening to the line (3.1);
· waiting for a period of silence having at least a predetermined duration before moving on to the following step;
· sending the pre-recorded voice message over the line (3.3);
· while sending the message, continuing to listen to the line (3.4);
· if the silence on the line is interrupted, returning to the first step of listening to the line (3.1); and
· then stopping the new call.

3. A computer program for implementing the method according to claim 1 for directly accessing the voice mailbox of a telephone line that is configured, while the line is busy, to redirect incoming telephone calls to its voice mailbox, the program being **characterized in that** it comprises instructions for:
· triggering a first group of calls to the target line (1.1);
· waiting for a first predetermined duration that is long enough to have placed the line in the busy state (1.2);
· triggering a new call to the line; and
· stopping the calls of the first group at the end of a second predetermined duration that is longer than the first duration, but short enough to avoid causing the telephone of the line to ring (2.1).

4. A computer program for implementing the method according to claim 2 for automatically placing a pre-recorded voice message on a voice mailbox of a line that is configured, while the line is busy, to redirect incoming telephone calls to its voice mailbox, the method comprising instructions for:
· triggering a first group of calls to the line (1.1);
· waiting for a first predetermined duration that is long enough to have placed the line in the busy state (2.1) ;
· triggering a new call to the line;
· stopping the calls of the first group at the end of a second predetermined duration that is longer than the first duration, but short enough to avoid causing the telephone of the line to ring (1.2);
· listening to the line (3.1);
· waiting for a period of silence having at least a predetermined duration before moving on to the following step;
· sending the pre-recorded voice message over the line (3.3);
· while sending the message, continuing to listen to the line (3.4); and
· if the silence on the line is interrupted, returning to the step of listening to the line (3.1).

5. A computer server hosting a computer program according to claim 3 or claim 4.

## Patentansprüche

1. Verfahren zum direkten Zugriff auf die Voicemail einer Telefonleitung, die derart konfiguriert ist, dass die Telefonanrufe, die empfangen werden, während die Leitung besetzt ist, zur Voicemail rückgesendet werden, **dadurch gekennzeichnet, dass** es darin besteht, die folgenden Schritte auszuführen:
- Auslösen einer ersten Anrufgruppe in Richtung der Zielleitung (1.1),
- Abwarten einer ersten vorbestimmten Verzögerung, die lang genug ist, um die Leitung in den besetzten Zustand gebracht zu haben (2.1),
- Auslösen eines neuerlichen Anrufes in Richtung der Leitung,
- Stoppen der Anrufe der ersten Gruppe am Ende einer zweiten vorbestimmten Verzögerung, die länger als die erste Verzögerung aber kurz genug ist, um das Telefon der Leitung nicht zum Läuten gebracht zu haben (1.2).

2. Verfahren zum automatischen Hinterlassen einer voraufgezeichneten Sprachnachricht auf einer Voicemail einer Leitung, die derart konfiguriert ist, dass die Telefonanrufe, die empfangen werden, während die Leitung besetzt ist, zur Voicemail rückgesendet werden, bei dem zuerst das Verfahren gemäß Anspruch 1 ausgeführt wird, um direkt auf die Voicemail zuzugreifen, und dann bei einem neuerlichen Anruf die folgenden Schritte ausgeführt werden, um automatisch eine voraufgezeichnete Sprachnachricht am Ende Empfangsmeldung der Voicemail zu senden:
- Abhören der Leitung (3.1),
- Warten auf eine Ruhepause von mindestens einer vorbestimmten Dauer, bevor zum folgenden Schritt übergegangen wird,
- Senden einer auf der Leitung voraufgezeichneten Sprachmeldung (3.3),
- während des Sendens der Meldung, weiter Abhören der Leitung (3.4),
- wenn die Ruhepause auf der Leitung unterbrochen wird, Zurückkehren zum ersten Schritt des Abhörens der Leitung (3.1),
- dann Stoppen des neuerlichen Anrufs.

3. Computerprogramm zum Durchführen des Verfahrens nach Anspruch 1 zum direkten Zugriff auf die Voicemail einer Telefonleitung, die derart konfiguriert ist, dass die Telefonanrufe, die empfangen werden, während die Leitung besetzt ist, zur Voicemail rückgesendet werden, **dadurch gekennzeichnet, dass** es die folgenden Befehle umfasst, um:
- eine erste Gruppe von Anrufen in Richtung der Zielleitung auszulösen (1.1),
- eine erste vorbestimmte Verzögerung abzuwarten, die lang genug ist, um die Leitung in den besetzten Zustand gebracht zu haben (1.2),
- einen neuerlichen Anruf in Richtung der Leitung auszulösen,
- die Anrufe der ersten Gruppe nach einer zweiten vorbestimmten Verzögerung, die länger als die erste Frist aber kurz genug ist, um das Telefon der Leitung nicht zum Läuten gebracht zu haben, zu stoppen (2.1).

4. Computerprogramm fzum Durchführen des Verfahrens nach Anspruch 2 zum automatischen Hinterlassen einer voraufgezeichneten Sprachmeldung auf einer Voicemail einer Leitung, die derart konfiguriert ist, dass die Telefonanrufe, die empfangen werden, während die Leitung besetzt ist, zur Voicemail rückgesendet werden, umfassend die folgenden Befehle, um:
- eine erste Anrufgruppe in Richtung der Zielleitung auszulösen (1.1),
- eine erste vorbestimmte Verzögerung abzuwarten, die lang genug ist, um die Leitung in den besetzten Zustand gebracht zu haben (2.1),
- einen neuerlichen Anruf in Richtung der Leitung auszulösen,
- die Anrufe der ersten Gruppe nach einer zweiten vorbestimmten Verzögerung, die länger als die erste Frist aber kurz genug ist, um das Telefon der Leitung nicht zum Läuten gebracht zu haben, zu stoppen (1.2),
- die Leitung abzuhören (3.1),
- eine Ruhepause von mindestens einer vorbestimmten Dauer abzuwarten, bevor der nächste Schritt eingeleitet wird,
- die voraufgezeichnete Sprachmeldung auf der Leitung zu senden (3.3),
- während des Sendes der Meldung weiter Abhören der Leitung (3.4),
- wenn die Ruhepause auf der Leitung unterbrochen wird, zum Schritt des Abhörens der Leitung zurückkehren (3.1).

5. Informatikserver, der ein Computerprogramm nach Anspruch 3 oder 4 umfasst.
